# EUROPEAN PATENT APPLICATION

(11) **EP 4 112 869 A1**
(43) Date of publication of application: **04.01.2023**
(21) Application number: 21183269.6
(22) Date of filing: 01.07.2021
(51) Int. Cl.: E21B 17/10, E21B 17/03, B23K 26/34, E21B 17/042

(54) **LASER CLADDED SHANK ADAPTER**

(71) Applicant: Sandvik Mining and Construction Tools AB, 81181 Sandviken (SE)
(72) Inventor: Blomfeldt, Thomas, 81181 Sandviken (SE); Leanders, Benneth, 81181 Sandviken (SE); Portin, Johan, 81181 Sandviken (SE); Anerud, Marcus, 81181 Sandviken (SE)
(74) Representative: Sandvik

(57) **Abstract**

A shank adapter to form part of a drilling assembly wherein at least a part of the external surface has at least one laser cladding layer for corrosion and / or wear protection and a method of providing corrosion protection on a shank adapter wherein a corrosive and / or wear protection layer is applied to at least one part of the external surface(s) of the shank adapter using laser cladding.

## Description

### Field of invention

The present invention relates to a shank adapter for top hammer rock drilling having a laser cladded corrosion and / or wear protection layer and a method of producing thereof.

### Background

Shank adapters are used in rock drills as the main component which transfers the impact energy from the piston to the drill string while being rotated. Further, shank adapters are used to transfer flushing media from the rock drill into the drill string. Since shank adapters need to have high impact resistance, they are typically made from high strength carburized steel. However, the drawback of this material is that it is corroded by the flushing media, which may for example contain chloride, sulphide or other ions which accelerate the corrosion. If the shank adapter is corroded, its functionality decreases. The steel may for example have issues with stress corrosion cracking as the mechanical strength of the material is decreased.

Further, it is important to maintain the integrity of the seals inside the flushing housing for preventing leakage of the flushing water and maintaining good flushing pressure. For the seals to not wear out prematurely, it is important that the surface of the shank adapter in contact with the seals remains in a good, non-corroded condition. A corroded surface is highly abrasive and leads to premature failure of the seals in the flushing housing of the rock drill.

Therefore, it is advantageous to provide a corrosion protection coating on the surface of the shank adapter.

A known method of corrosion protection on shank adapters is to provide a hard chrome plating on its surface. However, there are several disadvantages of this: hard chrome layers contain pores and microcracks which can act as channels for the water to penetrate through and reach the surface of the shank adapter therefore removing the corrosion protection. Further, the process of applying the hard chrome layer has a high energy consumption and the hexavalent chrome used is harmful to the environment. Therefore, the problem to be solved is how to provide an alternative method of improving the corrosion and / or resistance of surfaces of the shank adapter.

### Summary of the Invention

It is an objective of the present invention to provide an alternative means to increase the corrosion and / or wear resistance of shank adapters. This objective is achieved by providing a shank adapter to form part of a drilling assembly, the shank adapter comprising: a longitudinal axis and an external surface; a threaded part provided at a forward end and a plurality of splines provided at a rearward end; and a machine part extending axially between the threaded part and the splines; characterised in that: at least a part of the external surface has at least one laser cladding layer for corrosion and / or wear protection.

Advantageously, the laser cladding layer provides an alternative means of providing a corrosion protection layer to the surface of the shank adapter. The laser cladding provides a denser layer compared to a hard chrome layer and contains fewer pores and microcracks, therefore the longevity of the protective layer and the level of corrosion protection is increased. Furthermore, the wear resistance is improved and therefore the initial smooth surface finish provided is maintained which results in less wear on the contacting seals. If desired it is also possible to provide a coating on the laser cladding. Compared to chrome plating, the laser cladding will have better bonding to the substrate therefore reducing the risk of delamination of the protective later. However, owing to the minimum heat input caused by the laser cladding process, the heat affected zone will not significantly impact the properties of the material in the substrate so that the mechanical integrity of the shank is maintained. Additionally, as the properties of the laser cladding is based on the properties of the cladding powder used, the material used for the laser cladding can be selected to suit the properties required for specific application and drilling environments.

In one embodiment the thickness of the laser cladding layer(s) is between 20 - 2000 µm. Advantageously, this thickness range provides an optimal balance between providing sufficient corrosion and wear protection without adding unnecessary cost and weight.

In one embodiment the laser cladding layer(s) is /are applied such that the outer diameter of the section of the shank adapter where the laser cladding layer(s) has been applied is substantially uniform. Advantageously, this provides consistent corrosion and wear protection across the whole area of the external surface where the cladding is applied.

In one embodiment the laser cladding layer(s) is / are positioned on the machine part. Advantageously, this is the section that is most subjected to corrosive attack and wear from seals interaction especially if water containing particles is used as flushing agent, therefore it is advantageous to provide the laser cladding in this region.

In one embodiment, the laser cladding layer(s) is / are positioned around a flush hole extends radially through the machine part. Advantageously, this provides corrosion / wear protection in the region that is most subjected to corrosive attack and wear.

In one embodiment the shank adapter further comprises a layer of phosphate on top of the outermost laser cladding layer and a layer of wax on top of the layer of phosphate. Advantageously, this provides an additional corrosion protection during transportation for the shank adapter.

In one embodiment, the composition of the laser cladding layer comprises a metal matrix composite. Advantageously, the presence of the metal matrix composite increases the wear resistance of the laser cladding.

In one embodiment, the composition of the laser cladding layer comprises a metal alloy. Advantageously, the metal alloy can be selected having superior corrosion and /or wear resistance to suit the application.

In one embodiment, the laser cladding has a hardness of between 500 to 1800 HV30.Advantageously, this provides increased wear resistance.

In one embodiment, the outermost laser cladding layer has a surface roughness of <3 Ra. Advantageously, this reduces the wear on the contacting seals.

According to another aspect of the present invention there is a method of providing corrosion protection on a shank adapter characterised in that: a corrosive and / or wear protection layer is applied to at least one part of the external surface(s) of the shank adapter using laser cladding.

Advantageously, laser cladding is also more environmentally friendly compared to hard chrome plating as it is a less energy consumptive process and does not use any harmful chemicals. Further, laser cladding is a faster process compared to hard chrome plating, which is advantageous for production and produces a more reliable corrosion protection layer which will increase the lifetime of the shank adapter and other drilling components that attach to the shank adapter.

In one embodiment, the laser cladding is done using extreme high-speed laser (EHLA) material deposition. Advantageously, EHLA provides thinner layers, with a reduced heat effected zone as the dilution between the cladding and the substrate is smaller, with higher power efficiency and faster processing times.

In one embodiment, the external surface of the shank adapter is ground and / or polished prior to application of the laser cladding layer(s). Advantageously, this increases the adhesion of the laser cladding corrosion protection layer to the external surface of the shank adapter.

In one embodiment, the outermost laser cladding layer is ground and / or polished. Advantageously, this reduces wear on the seals and therefore the lifetime of the product is increased and may reduce the area where possible cracks can be initiated from.

In one embodiment, the outermost laser cladding layer is coated in a layer of phosphate and then waxed. Advantageously, this provides transport protection for the laser cladding corrosion protection layer.

### Brief description of drawings

A specific implementation of the present invention will now be described, by way of example only, and with reference to the accompanying drawings in which:
- Figure 1:: Schematic drawing of a shank adapter.
- Figure 2:: One embodiment of the protective layers.
- Figure 3:: An alternative embodiment of the protective layers.

### Detailed description

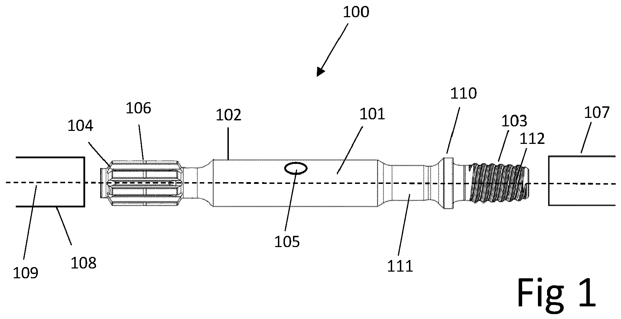

Figure 1 shows a shank adapter 100 comprising a machine part 101 (otherwise known as a main body ) having a forward end 103 and a rearward end 104, a longitudinal axis 109 and an external surface 102. A plurality of axially parallel elongate splines 106 project radially outward at the rearward end 104. The splines 106 are configured to be engaged by corresponding splines of drive bushing in a rotational motor (not shown) to induce rotation of the shank adaptor 100 about axis 109 during drilling operations. The shank adaptor 100 further comprises a flush hole (or bore) 105 positioned axially between the forward end 103 and the rearward end 104 that extends radially through the machine part 101 from the external surface 102 to an internal cavity or region extending axially within the shank adaptor 100. The shank adaptor 100 is configured for coupling to an elongate drill string and to allow transmission of a stress wave to a drill bit (not shown) located at the deepest region of the drill hole to impart the percussion drilling action. In particular, the forward end 103 may be coupled to a rearward end of a rearwardmost elongate drill rod 107 forming a part of the drill string or to a coupling (not shown) which is then connected to the drill rod 107. The rearward end 104 is configured to be contacted by a hydraulically driven piston 108 that creates the stress wave within the shank adaptor 100 and the drill string. The forward end 103 comprises a threaded part 112. Optionally the forward end 103 also comprises an annular shoulder 110 from which the threaded part 112 axially projects. The threaded part 112 could be either a male or female thread. Optionally, a slim 111 is positioned axially between the machine part 101 and the threaded part 112.

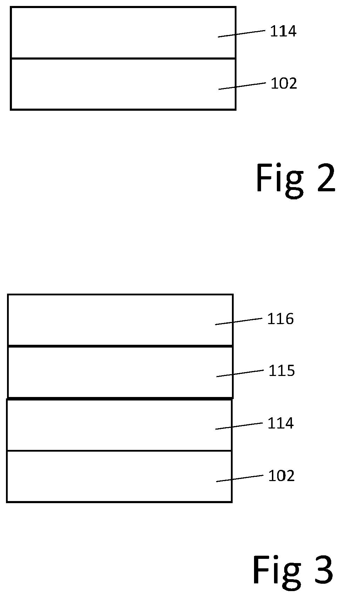

Figure 2 shows that at least a part of the external surface 102 has at least one laser cladding layer 114 applied thereon for corrosion and / or wear protection. The external surface 102 acts as a substrate for the laser cladding layer(s) 114.

The thickness of the laser cladding layer(s) 114 is between 20 - 2000 µm, preferably between 20-1000 µm, more preferably 25-500 µm. Preferably, the laser cladding layer(s) 114 is /are applied such that the outer diameter of the section of the shank adapter 100 where the laser cladding layer(s) 114 has been applied is substantially uniform.

Preferably, the laser cladding layer(s) 114 is / are positioned on the machine part 101. The laser cladding layer(s) 114 may be positioned over the entire external surface 102 of the machine part 101 or just part of it, for examples the regions of the machine part 101 that are most subjected to corrosion and / or wear. In one embodiment, the laser cladding layer(s) 114 is / are positioned only on the machine part 101. In other words, the laser cladding layer(s) 114 is/are not positioned on the splines 106 or the threaded part 112. In another embodiment, the laser cladding layer(s) 114 is positioned over the entire external surface 102 of the shank adapter 100.

In one embodiment, the laser cladding layer(s) 114 is / are positioned around or surrounding the flush hole 105 and / or the laser cladding layer(s) 114 is / are positioned on and / or near the regions of the machine part 101 that come into contact with the seals from rock drill. The positioning of the seals on the rock drill can vary depending on the design and the positioning of the laser cladding layer(s) 114 can be customised to correspond with the locations of the seals.

Figure 3 shows that at least a part of the external surface 102 has at least one laser cladding layer 114 applied thereon and then preferably there is layer of phosphate 115 on top of the outermost laser cladding layer 114 and a layer of wax 116 on top of the layer of phosphate 115. Alternative protective coatings such as, but not limited to, oil or paint could be used instead of the wax. Alternatively, the shank adapter 100 may further comprise only a layer of phosphate 115 on top of the laser cladding layer(s) 114. Or, the shank adapter 100 may further comprise only a layer of wax 116 or any other suitable protective coating such as oil or paint directly on top of the laser cladding 114.

Preferably, the composition of the laser cladding corrosion protection layer 114 comprises a metal matrix composite (MMC). The MMC comprises a hard metal for example this could be tungsten carbide, titanium carbide, tantalum carbide, niobium carbide or any other carbide or nitride or a mixture thereof and a metal alloy as a binder which could for example comprise cobalt, nickel, iron, chromium or a mixture thereof. Alternatively, the composition of the laser cladding corrosion protection layer 114 comprises a metal alloy. The composition of the laser cladding material 114 could a stainless steel or tool steel. The composition of the laser cladding material 114 could for example be a nickel-based alloy e.g. a Ni-Cr alloy; an Fe based alloy; a Cr-based alloy; a mixture thereof or any other suitable material. The material selected can be chosen to suit the specific application and drilling environment, for example stainless steel will provide better corrosion protection, whereas tool steel or hard metal composite will provide better wear resistance.

Preferably, the laser cladding 114 has a hardness of between 180 to 1500 HV10, more preferably 400-1400 HV10 , even more preferably 500-1300 HV10. Preferably, the coating is dense enough to prevent water from reaching the external surface 102 of the machine part 101. Hardness measurements are an average value for the cladded layer 114.

If the cladding layer 114 is an MMC preferably the hardness of the metal matrix is 500-900 HV10, preferably 600-900 HV10, more preferably 600-900 HV10 and the hardness of the hard metal phase is 1500-3500 HV0.1, preferably 2000-3500 HV0.1 and most preferably 2500-3500 HV0.1.

Preferably, the outermost laser cladding layer 114 has a surface roughness of <3 Ra, preferably <2 Ra, more preferably <1 Ra. The Ra value measured according to EN ISO 4287.

Another aspect of the present invention is a method of providing corrosion protection on a shank adapter 100 wherein a corrosive and / or wear protection layer 114 is applied to at least one part of the external surface(s) 102 of the shank adapter (100) using laser cladding. The external surface 102 can also be considered to be the substrate for the laser cladding. Laser cladding is a melting process where a laser beam is used to fuse a powder alloy with another metallurgical composition onto a substrate. A metallic substrate is exposed to a laser beam while a powder is injected over the melted bath to form, after being solidified, a layer referred to as the cladding on the surface of the substrate. The key benefit is that only a very thin layer of the substrate has to be melted in order to achieve a metallurgical bond between the added material and the substrate. The laser cladding could be applied using a fiber, C02, YAG or diode laser or any other suitable laser.

Preferably, the laser cladding is done using extreme high-speed laser material deposition (EHLA). EHLA is a laser cladding method which is up to 10 times faster than traditional laser cladding methods in terms of surface coverage rate. The high-speed deposition from EHLA does not only result in a faster processing time, it also makes it possible to apply cladding to a substrate with even lower heat input and smaller distortion, meaning that the heat effected zone will be even less in the substrate. In addition, the small dilution formed by EHLA makes it possible to apply even thinner coatings, the thickness of the laser cladding layers is for example typically only 25-400 µm thick.

Preferably, the external surface 102 of the shank adapter 100 is ground and / or polished prior to application of the laser cladding layer(s) 114. Alternatively, the external surface 102 of the shank adapter 100 may be left unground, which has the advantage of quick processing time. Additionally, or alternatively, the external surface 102 of the surface could be carburized and / or pre-heated prior to laser cladding.

Preferably, the outermost laser cladding layer 114 is ground and / or polished. Alternatively, the surface could be left unprocessed, which has the advantage of decreasing processing time.

Preferably, the outermost laser cladding layer 114 is coated in a layer of phosphate 115 and then coated in a layer of wax 116. Alternative protective coatings such as, but not limited to, oil or paint could be used instead of the wax. Alternatively, the outermost laser cladding layer 114 may be coated with only a layer of phosphate 115 or only with a layer of wax 116 or any other suitable protective coating such as oil or paint directly on top of the laser cladding 114.

## Claims

1. A shank adapter (100) to form part of a drilling assembly, the shank adapter (100) comprising:
a longitudinal axis (109) and an external surface (102);
a threaded part (112) provided at a forward end (103) and a plurality of splines (106) provided at a rearward end (104); and
a machine part (101) extending axially between the threaded part (112) and the splines (106);
**characterised in that:**
at least a part of the external surface (102) has at least one laser cladding layer (114) positioned thereon for corrosion and / or wear protection.

2. The shank adapter (100) according to claim 1 wherein the thickness of the laser cladding layer(s) (114) is between 20 - 2000 µm.

3. The shank adapter (100) according to claim 1 or claim 2 wherein the laser cladding layer(s) (114) is /are applied such that the outer diameter of the section of the shank adapter (100) where the laser cladding layer(s) (114) has been applied is substantially uniform.

4. The shank adapter according to any of the previous claims wherein the laser cladding layer(s) (114) is / are positioned on the machine part (101).

5. The shank adapter according to claim 4, wherein the laser cladding layer(s) is / are positioned around a flush hole (105) that extends radially through the machine part (101).

6. The shank adapter (100) according to any of the previous claims further comprising a layer of phosphate (115) on top of the outermost laser cladding layer (114) and a layer of wax (116) on top of the layer of phosphate (115).

7. The shank adapter (100) according to any of the previous claims wherein the composition of the laser cladding layer(s) (114) comprises a metal matrix composite.

8. The shank adapter (100) according to any of claims 1-6 wherein the composition of the laser cladding layer(s) (114) comprises a metal alloy.

9. The shank adapter (100) according to any of the previous claims wherein the laser cladding layer(s) (114) has a hardness of between 180 to 1500 HV10.

10. The shank adapter (100) according to any of the previous claims wherein the outermost laser cladding layer (114) has a surface roughness of <3 Ra.

11. A method of providing corrosion protection on a shank adapter (100) **characterised in that:** a corrosive and / or wear protection layer (114) is applied to at least one part of the external surface(s) (102) of the shank adapter (100) using laser cladding.

12. The method according to claim 11 wherein the laser cladding is done using extreme high-speed laser material deposition( EHLA).

13. The method according to claim 11 or claim 12 wherein the external surface (102) of the shank adapter (100) is ground and / or polished prior to application of the laser cladding layer(s) (114).

14. The method according to any of claims 11-13, wherein the outermost laser cladding layer (114) is ground and / or polished.

15. The method according to any of claims 11-14, wherein the outermost laser cladding layer (114) is coated in a layer of phosphate and then waxed.
